# EUROPÄISCHE PATENTSCHRIFT

(11) **EP 1 814 750 B1**
(45) Veröffentlichungstag und Bekanntmachung des Hinweises auf die Patenterteilung: **08.01.2014**
(21) Anmeldenummer: 05815167.1
(22) Anmeldetag: 15.11.2005
(51) Int. Cl.: B60H 1/00, F28D 20/02, F28D 1/053, F28D 21/00, F28D 20/00

(54) **KLIMAANLAGE MIT KÄLTESPEICHER**
AIR-CONDITIONING SYSTEM WITH A COLD ACCUMULATOR
SYSTEME DE CLIMATISATION A ACCUMULATEUR DE FROID

(30) Priorität: 16.11.2004 DE 102004055340
(43) Veröffentlichungstag der Anmeldung: 08.08.2007
(73) Patentinhaber: Behr GmbH & Co. KG, 70469 Stuttgart (DE)
(72) Erfinder: BURK, Roland, 70469 Stuttgart (DE); DÜRR, Gottfried, 70437 Stuttgart (DE); FEUERECKER, Günther, 70567 Stuttgart (DE); KOHL, Michael, 74321 Bietigheim (DE); MANSKI, Ralf, 70197 Stuttgart (DE); STRAUSS, Thomas, 73274 Notzingen (DE)
(74) Vertreter: Grauel, Andreas
(86) Internationale Anmeldenummer: PCT/EP2005/012254
(87) Internationale Veröffentlichungsnummer: WO 2006/053721

(56) Entgegenhaltungen:
- US-A- 5 644 929
- US-A1- 2004 093 889
- US-A1- 2004 104 020

## Beschreibung

Die Erfindung betrifft eine Klimaanlage mit Kältespeicher für ein Kraftfahrzeug gemäß dem Oberbegriff des Anspruches 1.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann.

In der DE 101 56 944 A1 ist eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Teilbereich einzeln oder durch beide Teilbereiche gemeinsam leitbar ist. Der Kältemittelspeicher ist hierbei über die gesamte Tiefe des Verdampfers ausgebildet, wobei er zwischen Flachrohren und Wellrippen angeordnet ist. Entsprechende Klimaanlagen lassen jedoch noch Wünsche offen.

Die DE10124757A1 zeigt eine klimaanlage gemäß Oberbegriff des Anspruchs 1.

Ausgehend von diesem Stand der Technik ist es Aufgabe der Erfindung eine verbesserte Klimaanlage zur Verfügung zu stellen. Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage für ein Kraftfahrzeug vorgesehen mit einem Verdampfer, welcher zum Abkühlen von zu konditionierender Luft für den Innenraum dient, wobei ein Kältespeicher mit darin enthaltenem Kältespeichermedium vorgesehen ist, der im Bereich des Verdampfers zwischen kältemittelführenden Rohren oder Scheiben und/oder Wellrippen angeordnet ist. Dabei ist der Kältespeicher, welcher durch mindestens ein Kältespeicherelement gebildet ist, ausschließlich in einem luftaustrittsseitigen Bereich des Verdampfers und beabstandet vom lufteintrittsseitigen Bereich des Verdampfers angeordnet. In diesem Bereich ist in Folge der verringerten von der Luft eingetragenen Wärmelast die Kältemitteltemperatur am niedrigsten, so dass bei gutem Kontakt mit den das Kältemittel führenden Rohren oder Scheiben und den Wellrippen der Kältespeicher schnell gekühlt werden kann und die Temperatur bei Betrieb gehalten wird.

Das Kältespeicherelement besteht bevorzugt aus Aluminium, insbesondere innen und/oder außen beschichtetem Aluminium, Kupfer, einer Kupfer-ZinkLegierung, Kunstharz oder Kunststoff. Ein Aluminium-Behälter hat den Vorteil, dass er sich mit den übrigen Teilen des Verdampfers verlöten lässt.

Erfindungsgemäß ist das Kältespeicherelement zwischen Wellrippen und/oder Rohre oder Scheiben des Verdampfers eingeschoben. Hierfür können die Wellrippen im Bereich des Kältespeicherelements entsprechend flacher ausgebildet sein. Dabei sind bevorzugt auf einer Seite des Kältespeicher-elements die Wellrippen und auf der anderen, gegenüberliegenden Seite die Rohre oder Scheiben, wobei es sich natürlich auch um nur ein Wellrippenblech, ein Rohr oder eine Scheibe handeln kann, angeordnet.

Das Kältespeicherelement ist bevorzugt mit dem Verdampfer verlötet. Dies ermöglicht eine einfache Herstellung des Verdampfers, wobei das Verlöten mit dem herkömmlichen Verlöten des Verdampfers erfolgt. Das Verlöten hat neben den Vorteilen in Hinblick auf die Herstellung auch Vorteile in Hinblick auf den Wärmeübergang zwischen den mit Hilfe des Lots verbundenen Bereichen des Verdampfers und des Kältespeicherelements.

Alternativ kann das Kältespeicherelement auch, gegebenenfalls unter leichter Presspassung, zwischen die Wellrippen und/oder Rohre oder Scheiben eingeschoben werden, wobei gegebenenfalls eine zusätzliche Befestigung erforderlich ist. Hierbei kann der Wärmeübergang durch eine Wärmeleitpaste verbessert werden. Der Behälter kann in diesem Fall aus einem beliebigen Material bestehen, insbesondere kommen auch Kunststoff-Behälter, die resistent gegen aggressive Kältespeichermedien sind, in Frage.

Ferner können auf der Innenseite, d.h. in Kontakt mit dem Kältespeichermedium, Beschichtungen zur Begünstigung der Kristallbildung beim Erstarren aufgebracht sein, so dass keine zusätzlichen Kristallbildner im Kältespeichermedium benötigt werden. Eine Innenbeschichtung schützt zudem den Behälterwerkstoff vor Korrosion durch das Kältespeichermedium. Ebenfalls möglich sind Außenbeschichtungen.

Gemäß einer Ausführungsform ist das Kältespeicherelement kammartig ausgebildet, wobei die einzelnen, den Kammzähnen entsprechenden zahnartigen Bereiche in den Verdampfer hineinragen. Der Verbindungsbereich ist hierbei bevorzugt außerhalb des Verdampfers angeordnet. Das Befüllen dieses einteiligen Kältespeicherelements erfolgt vorzugsweise über eine einzige verschließbare Befüllöffnung, so dass sich der Befüllvorgang vereinfacht.

Beim Speichermedium handelt es sich bevorzugt um ein PCM-Material (phase change material), das bevorzugt kongruent schmelzende Medien, insbesondere Decanol, Tetra-, Penta- oder Hexadecan, LiClO_{3·}3H₂O, wässrige Salzlösungen oder organische Hydrate enthält oder hieraus gebildet ist. Im Speichermedium können auch Keimbildner vorgesehen sein, welche die Kristallbildung beschleunigen.

Die Phasenumwandlungstemperatur des Speichermediums liegt vorzugsweise in einem Bereich von 0°C bis 30°C, insbesondere von 2°C bis 15°C, insbesondere bevorzugt von 4°C bis 12°C.

Im Inneren des Kältespeicherelements können Einlagen, wie Wellrippenbleche, vorzugsweise aus Aluminium, jedoch sind auch andere Metalle oder Kunststoffe geeignet, oder andere Turbulenzeinlagen, wie Vliese oder Gestricke, bspw. aus Kunststoff oder Metall, oder Schäume, bspw. Metallschäume oder Kunststoffschäume, vorgesehen sein. Die Einlagen dienen einer Be- oder Verhinderung einer Strömungsausbildung des Kältespeichermediums. Unter Umständen dienen die Einlagen auch einer Erhöhung der inneren Oberfläche, so dass ein Kristallwachstum ermöglicht oder beschleunigt wird. Diese Einlagen sind insbesondere in den zahnartigen Bereichen angeordnet, können aber zusätzlich auch im Verbindungsbereich angeordnet sein.

Die Kältespeicherelemente können gleichmäßig über die gesamte Verdampferfläche verteilt angeordnet sein, jedoch ist auch eine ungleichmäßige, jedoch bevorzugt symmetrische Anordnung möglich. So können die Kältespeicherelemente beispielsweise nur im oberen und/oder unteren Teil des Verdampfers oder nur in der Mitte desselben angeordnet sein. Im Falle einer symmetrischen Anordnung ist eine Ausgestaltung möglich, gemäß der nur zwei unterschiedliche Formen von Wellrippen erforderlich sind. Ferner ermöglicht eine symmetrische Ausgestaltung, dass bei links/rechts getrennten Luftpfaden die Luftaustrittstemperaturen nach dem Verdampfer im Falle eines Idle-stop-Betriebs auf die gleiche Temperatur gekühlt werden.

Nicht gemäß der Erfindung kann der Kältespeicher auch in Verlängerung der Rohre oder Scheiben angeordnet sein, was keinen Strömungsquerschnittsverlust für die durchströmende Luft mit sich bringt.

Im Folgenden wird die Erfindung anhand mehrerer Ausführungsbeispiele mit Varianten unter Bezugnahme auf die Zeichnung im Einzelnen erläutert. Es zeigen:

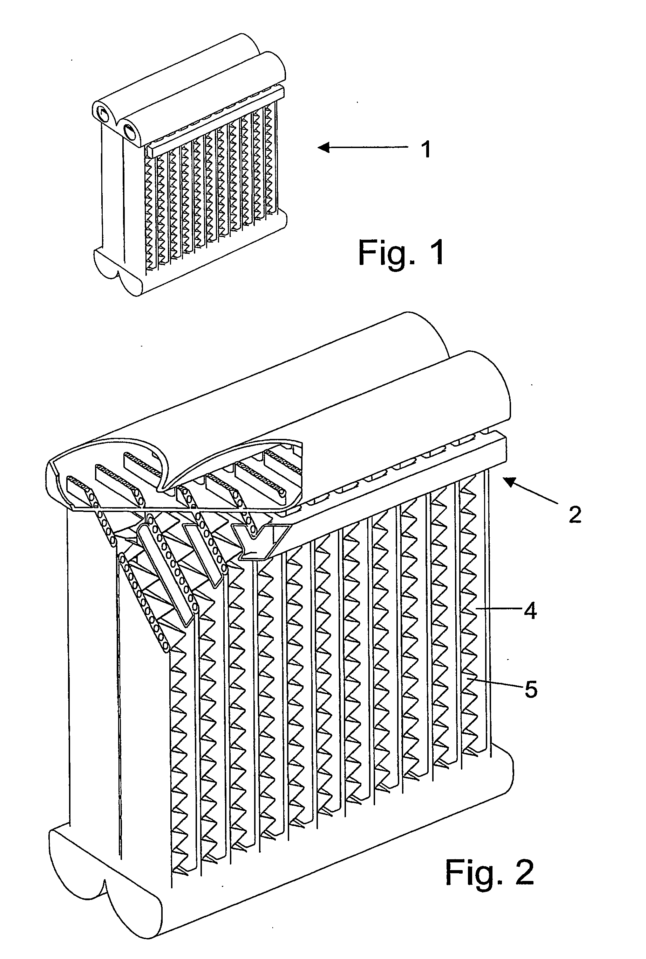

- Fig. 1: eine perspektivische Ansicht eines Wärmetauschers mit einem Kältespeicher,
- Fig. 2: eine teilweise geschnittene perspektivische Ansicht des Wärmetauschers mit Kältespeicher von Fig. 1,

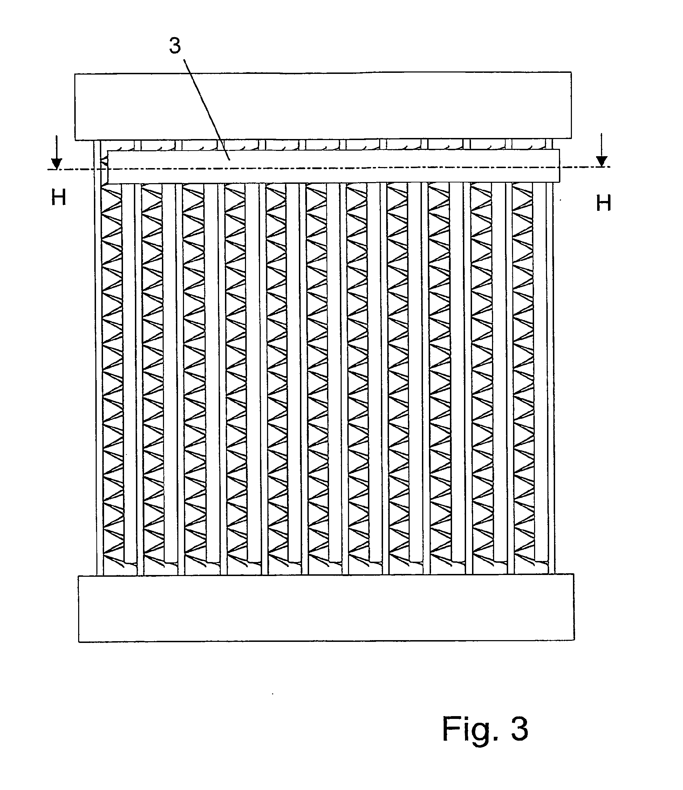

- Fig. 3: eine Seitenansicht des Wärmetauschers mit Kältespeicher von Fig. 1,
- Fig. 4: einen Schnitt entlang Linie H-H in Fig. 3,
- Fig. 5: eine perspektivische Ansicht eines Wärmetauschers mit Kältespeicher gemäß dem zweiten Ausführungsbeispiel,
- Fig. 6: einen Schnitt durch den Wärmetauscher von Fig. 5,
- Fig. 7: eine perspektivische Ansicht eines Wärmetauschers mit Kältespeicher gemäß dem dritten Ausführungsbeispiel,
- Fig. 8: einen Schnitt durch den Wärmetauscher von Fig. 7,
- Fig. 9: eine perspektivische Ansicht eines Wärmetauschers mit Kältespeicher gemäß dem nicht erfindungsgemäßen Ausführungseispiel,
- Fig. 10: einen Schnitt durch den Wärmetauscher von Fig. 9.

Eine Kraftfahrzeug-Klimaanlage zum Temperieren des Kraftfahrzeug-Innenraums mit einem Kältemittel-Kreislauf, von der nur der Verdampfer 1 dargestellt ist, weist, um auch bei einem Motorstopp zumindest über einen kurzen Zeitraum eine ausreichende Kühlleistung zur Verfügung zu stellen, einen Kältespeicher 2 bestehend aus einem Kältespeicherelement 3, welches mit einem Kältespeichermedium gefüllt ist, auf. Das Kältespeicherelement 3 ist durch einen Kunststoff-Behälter gebildet, so dass als Kältespeichermedien auch aggressive Medien, die nicht in Metall-Behälter gefüllt werden können, verwendet werden können. Als Kältespeichermedium dient vorliegend Tetra-, Penta- oder Hexadecan.

Der Verdampfer 1 weist einen im Wesentlichen herkömmlichen Aufbau mit zwei Reihen von Flachrohren 4 und dazwischen angeordneten Wellrippen 5 auf. Im oberen Bereich des Verdampfers 1 ist das Kältespeicherelement 3 auf der Rückseite desselben, das heißt auf der in normaler Luftströmungsrichtung hinten liegenden Seite, angeordnet. In dem Bereich, in welchem das Kältespeicherelement 3 angeordnet ist, sind die Wellrippen 5 etwas flacher ausgebildet, so dass ausreichend Platz für das Kältespeicherelement 3 zur Verfügung steht.

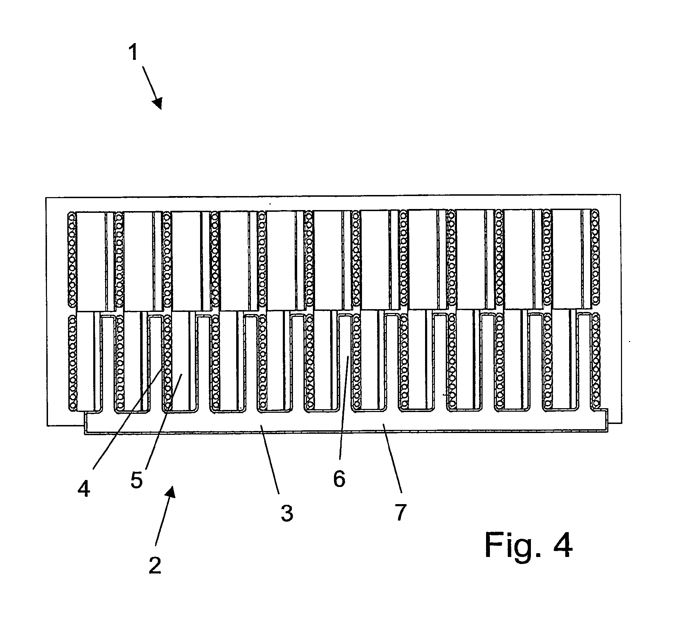

Das Kältespeicherelement 3 ist kammartig mit einer Mehrzahl von miteinander in Fluidverbindung stehenden Kammern ausgebildet, wobei die einzelnen, den Kammzähnen entsprechenden zahnartigen Bereiche 6 in den Verdampfer 1 hineinragen. Das Kältespeicherelement 3 ist mit den zahnartigen Bereichen 6 von der Rückseite her mit leichter Presspassung zwischen die Flachrohre 4 und Wellrippen 5 eingeschoben. Zudem ist eine Wärmeleitpaste, welche einen verbesserten Wärmekontakt zu den Flachrohren 4 und den auf der anderen Seite angeordneten Wellrippen 5 ermöglicht, auf das Kältespeicherelement 3 aufgetragen. Die zahnartigen Bereiche 6 enden etwa in Höhe des Endes der entsprechenden Flachrohrreihe des zweireihigen Verdampfers 1 (vgl. Fig. 4). Der Verbindungsbereich 7 ist auf der Rückseite des Verdampfers 1 außerhalb desselben angeordnet. Das Kältespeicherelement 3 weist nur einen einzigen, durchgehenden Hohlraum, gebildet durch eine Mehrzahl von Kammern auf, welcher vollständig mit dem Kältespeichermedium gefüllt ist Das Befüllen erfolgt über eine Öffnung (nicht dargestellt) in einem einzigen Arbeitsgang. Nach dem Befüllen wird die Öffnung fest verschlossen, so dass ein unbefugtes Öffnen sicher verhindert wird.

Im Inneren des durchgehenden Hohlraums sind gemäß einer nicht in der Zeichnung dargestellten Variante Elemente zur Verhinderung einer Strömungsausbildung vorgesehen sein, wie vorliegend ein Kunststoff-Vlies, welches gemäß der Variante nur in den zahnartigen Bereichen und nicht in dem Verbindungsbereich angeordnet ist.

Gemäß einer Variante besteht das Kältespeicherelement aus mit einem Kältespeichermedium gefüllten Aluminiumbehälter, die Gestalt entspricht dem des ersten Ausführungsbeispiels, welcher zwischen die Flachrohre und Wellrippen vor dem Verlöten des Verdampfers eingeschoben und mit dem Verdampfer mitgelötet wird, d.h. es handelt sich hierbei um einen integrierten, fest mit dem Verdampfer verbundenen Kältespeicher. Hierbei ist der Wärmekontakt auf Grund der Lötverbindung besser als der beim zuvor beschriebenen Ausführungsbeispiel, selbst bei Verwendung einer Wärmeleitpaste. Der Aluminiumbehälter kann auf seiner Außen- und/oder Innenseite zusätzlich beschichtet sein.

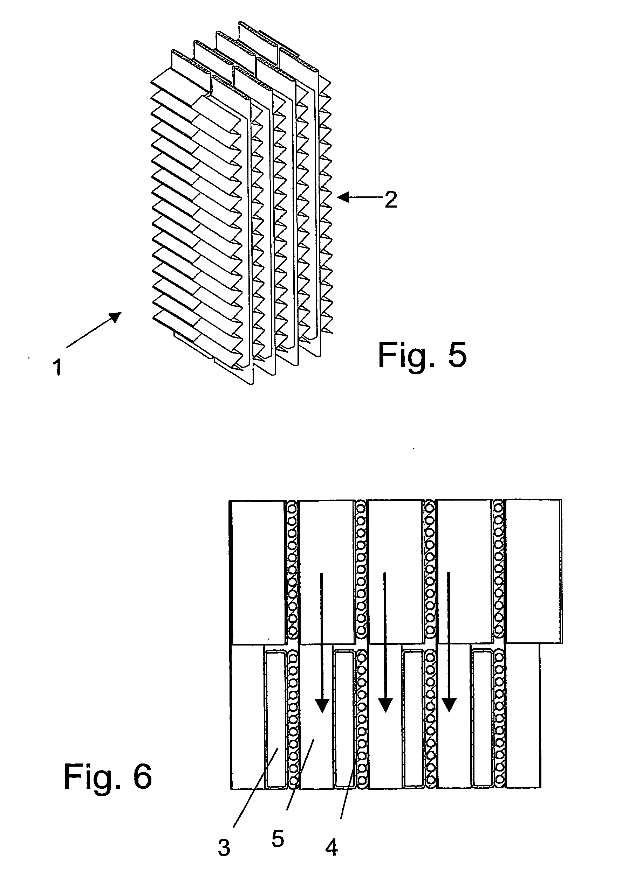

Figuren 5 und 6 zeigen ein zweites Ausführungsbeispiel gemäß dem bei einem zweireihigen Verdampfer als Kältespeicher 2 eine Mehrzahl von Kältespeicherelementen 3 zwischen die Wellrippen 5, welche etwas flacher als die im übrigen Bereich angeordneten Wellrippen ausgebildet sind, und die Flachrohre 4 der zweiten Reihe geschoben und hiermit verlötet sind. In Fig. 6 ist die Strömungsrichtung der Luft durch Pfeile angedeutet.

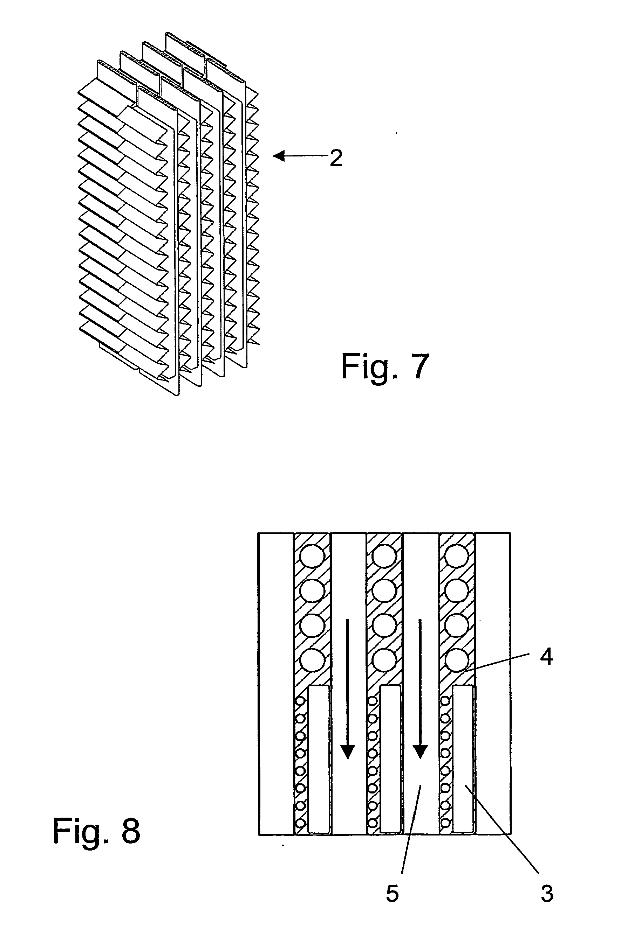

Gemäß dem dritten, in den Figuren 7 und 8 dargestellten Ausführungsbeispiel ist das Kältespeicherelement 3 direkt in die Flachrohre 4 integriert, so dass durchgehende Wellrippen 5 mit konstanter Höhe verwendet werden können. Die Flachrohre 4 weisen im Bereich des Kältespeicherelements, das auf einer Flachseite derselben angeordnet ist, eine größere Anzahl von Kanälen für das Kältemittel auf, welche einen verkleinerten Querschnitt im Vergleich zur anderen, in Strömungsrichtung der Luft vorn angeordneten Hälfte derselben haben.

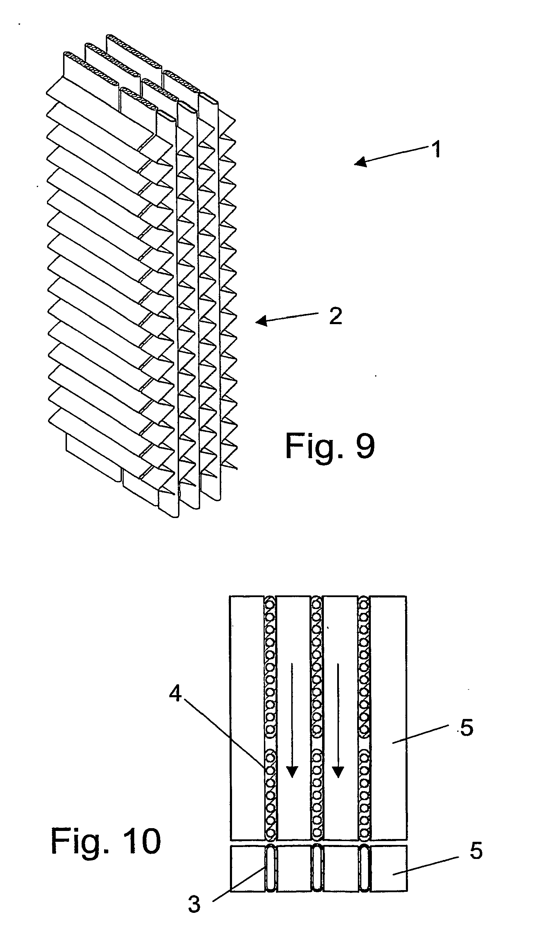

Der Kältespeicher 2 gemäß dem nicht erfindungsgemäßen Ausführungsbeispiel ist - in Luftströmungsrichtung gesehen - hinter der letzten Flachrohrreihe des Verdampfers 1 angeordnet, wobei zwischen den einzelnen Kältespeicherelementen 3 jeweils kurze Wellrippen 5 angeordnet sind, welche in ihrem Querschnitt den Wellrippen 5 zwischen den Flachrohren 4 entsprechen. Die Dicke der Kältespeicherelemente 3 entspricht hierbei derjenigen der Flachrohre 4, so dass die Luftströmung, die Fig. 10 durch Pfeile angedeutet ist, nicht beeinträchtigt wird. Die Kältespeicherelemente 3 sind mit den anderen Teilen des Verdampfers 1 verlötet.

Gemäß einer nicht in der Zeichnung dargestellten Variante sind die Wellrippen durchgehend ausgebildet, wodurch sich der Zusammenbau vereinfacht und die Teileanzahl des Verdampfers 1 verringert.

## Patentansprüche

1. Klimaanlage, insbesondere für ein Kraftfahrzeug, mit einem Kältespeicher in einem Kältemittefkreislauf, der einen Verdampfer (1) aufweist, welcher zum Abkühlen von zu konditionierender Luft insbesondere für einen Innenraum dient, wobei ein in einem Kältespeicher (2) enthaltenes Kältespeichermedium vorgesehen ist, das im Bereich des Verdampfers (1) zwischen kältemittelführenden Rohren (4) oder Scheiben und/oder Wellrippen (5) angeordnet ist, wobei der Kältespeicher (2) ausschließlich in einem luftaustrittsseitigen Bereich des Verdampfers (1) und beabstandet vom lufteintrittsseitigen Bereich des Verdampfers (1) angeordnet ist, **dadurch gekennzeichnet dass** der kältespeicher (2) durch mindestens ein Kältespeicherelement (3) gebildet ist, welches zwischen Wellrippen (5) und/oder Rohre (4) oder Scheiben des Verdampfers (1) eingeschoben ist.

2. Klimaanlage nach Anspruch 1, **dadurch gekennzeichnet, dass** der Verdampfer (1) ein mehrreihiger Verdampfer ist

3. Klimaanlage nach Anspruch 1 oder 2, **dadurch gekennzeichnet, dass** das Kältespeicherelement (3) zwischen Wellrippen (5) und Rohren (4) oder Scheiben des Verdampfers (1) angeordnet ist, wobei auf einer Flachseite des Kältespeicherelements (3) die Wellrippen (5) und auf der gegenüberliegenden Flachseite die Rohre (4) oder Scheiben angeordnet sind.

4. Klimaanlage nach einem der vorhergehenden Ansprüche, **dadurch gekennzeichnet, dass** das Kältespeicherelement (3) in ein Flachrohr (4) integriert ist, wobei es seitlich von mindestens einem Kältemittelströmungskanal des Flachrohres (4) angeordnet ist.

5. Klimaanlage nach Anspruch 4, **dadurch gekennzeichnet, dass** das Flachrohr (4) und das Kältespeicherelement (3) einstückig ausgebildet sind.

6. Klimaanlage nach einem der vorhergehenden Ansprüche, **dadurch gekennzeichnet, dass** das Kältespeicherelement (3) mit dem Verdampfer (1) verlötet ist.

7. Klimaanlage nach einem der vorhergehenden Ansprüche, **dadurch gekennzeichnet, dass** das Kältespeicherelement (3) kammartig ausgeblldet ist.

8. Klimaanlage nach einem der vorhergehenden Ansprüche, **dadurch gekennzeichnet, dass** das Kältespeicherelement (3) aus Aluminium, insbesondere beschichtetem Aluminium, besteht

9. Klimaanlage nach einem der vorhergehenden Ansprüche, **dadurch gekennzeichnet, dass** das Kältespeicherelement (3) eine Beschichtung, insbesondere eine Innenbeschichtung zur Unterstützung der Keimbildung, aufweist.

10. Klimaanlage nach einem der vorhergehenden Ansprüche, **dadurch gekennzeichnet, dass** das Kältespeichermedium durch ein PCM-Material gebildet ist.

11. Klimaanlage nach einem der vorhergehenden Ansprüchen, **dadurch gekennzeichnet, dass** die Phasenumwandlungstemperatur des Speichermediums (3) in einem Bereich von 0°C bis 30°C, insbesondere von 2°C bis 15°C, insbesondere bevorzugt von 4°C bis 12°C, liegt.

12. Klimaanlage nach einem der vorhergehenden Ansprüche, **dadurch gekennzeichnet, dass** im Kältespeicherelement mindestens eine Einlage angeordnet ist.

13. Klimaanlage nach einem der vorhergehenden Ansprüche, **dadurch gekennzeichnet, dass** die Kältespeicherelemente symmetrisch bezüglich einer Mittelebene des Verdampfers (1) angeordnet sind.

## Claims

1. An air-conditioning system, in particular for a motor vehicle, comprising a cold accumulator in a coolant circuit, which has an evaporator (1), which is used to cool air that is to be conditioned, in particular for an interior, wherein a cold accumulator medium contained in a cold accumulator (2) is provided and is arranged in the region of the evaporator (1) between coolant-guiding tubes (4) or plates and/or corrugated ribs (5), wherein the cold accumulator (2) is arranged exclusively in an air-outlet-side region of the evaporator (1) and at a distance from the air-inlet-side region of the evaporator (1), **characterised in that** the cold accumulator (2) is formed by at least one cold accumulator element (3), which is inserted between corrugated ribs (5) and/or tubes (4) or plates of the evaporator (1).

2. The air-conditioning system according to claim 1, **characterised in that** the evaporator (1) is a multi-row evaporator.

3. The air-conditioning system according to claim 1 or 2, **characterised in that** the cold accumulator element (3) is arranged between corrugated ribs (5) and tubes (4) or plates of the evaporator (1), wherein the corrugated ribs (5) are arranged on one flat side of the cold accumulator element (3), and the tubes (4) or plates are arranged on the opposite flat side.

4. The air-conditioning system according to one of the preceding claims, **characterised in that** the cold accumulator element (3) is integrated into a flat tube (4), wherein it is arranged to the side of at least one coolant flow channel of the flat tube (4).

5. The air-conditioning system according to claim 4, **characterised in that** the flat tube (4) and the cold accumulator element (3) are formed integrally.

6. The air-conditioning system according to one of the preceding claims, **characterised in that** the cold accumulator element (3) is soldered to the evaporator (1).

7. The air-conditioning system according to one of the preceding claims, **characterised in that** the cold accumulator element (3) is formed in a comb-like manner.

8. The air-conditioning system according to one of the preceding claims, **characterised in that** the cold accumulator element (3) consists of aluminium, in particular coated aluminium.

9. The air-conditioning system according to one of the preceding claims, **characterised in that** the cold accumulator element (3) has a coating, in particular an inner coating for assisting nucleation.

10. The air-conditioning system according to one of the preceding claims, **characterised in that** the cold accumulator medium is formed by a PCM material.

11. The air-conditioning system according to one of the preceding claims, **characterised in that** the phase-transition temperature of the storage medium (3) lies in a range from 0 °C to 30 °C, in particular from 2 °C to 15°C, in particular preferably from 4 °C to 12 °C.

12. The air-conditioning system according to one of the preceding claims, **characterised in that** at least one insert is arranged in the cold accumulator element.

13. The air-conditioning system according to one of the preceding claims, **characterised in that** the cold storage elements are arranged symmetrically about a mid-plane of the evaporator (1).

## Revendications

1. Système de climatisation, en particulier pour un véhicule automobile, comprenant un accumulateur de froid disposé dans un circuit de fluide frigorigène, lequel accumulateur de froid présente un évaporateur (1) qui sert au refroidissement d'air à conditionner, en particulier pour un habitacle, où il est prévu un milieu d'accumulateur de froid contenu dans l'accumulateur de froid (2), milieu qui est disposé, dans la zone de l'évaporateur (1), entre des tubes (4) acheminant le fluide frigorigène ou entre des plaques et/ou des ailettes ondulées (5), où l'accumulateur de froid (2) est disposé exclusivement dans une zone du côté de sortie d'air de l'évaporateur (1) et en étant espacé de la zone du côté d'entrée d'air de l'évaporateur (1), **caractérisé en ce que** l'accumulateur de froid (2) est formé par au moins un élément d'accumulateur de froid (3) qui est inséré entre des ailettes ondulées (5) et/ou des tubes (4) ou des plaques de l'évaporateur (1).

2. Système de climatisation selon la revendication 1, **caractérisé en ce que** l'évaporateur (1) est un évaporateur à plusieurs rangées.

3. Système de climatisation selon la revendication 1 ou 2, **caractérisé en ce que** l'élément (3) de l'accumulateur de froid est disposé entre des ailettes ondulées (5) et des tubes (4) ou des plaques de l'évaporateur (1), où les ailettes ondulées (5) sont disposées sur un côté plat de l'élément (3) de l'accumulateur de froid, les tubes (4) ou les plaques étant disposé(e)s sur le côté plat opposé.

4. Système de climatisation selon l'une quelconque des revendications précédentes, **caractérisé en ce que** l'élément (3) de l'accumulateur de froid est intégré dans un tube plat (4), où ledit élément de l'accumulateur de froid est disposé latéralement par rapport au moins à un conduit d'écoulement de fluide frigorigène du tube plat (4).

5. Système de climatisation selon la revendication 4, **caractérisé en ce que** le tube plat (4) et l'élément (3) de l'accumulateur de froid sont configurés en formant une seule et même pièce.

6. Système de climatisation selon l'une quelconque des revendications précédentes, **caractérisé en ce que** l'élément (3) de l'accumulateur de froid est brasé avec l'évaporateur (1).

7. Système de climatisation selon l'une quelconque des revendications précédentes, **caractérisé en ce que** l'élément (3) de l'accumulateur de froid est configuré en forme de peigne.

8. Système de climatisation selon l'une quelconque des revendications précédentes, **caractérisé en ce que** l'élément (3) de l'accumulateur de froid est en aluminium, en particulier en aluminium avec un revêtement.

9. Système de climatisation selon l'une quelconque des revendications précédentes, **caractérisé en ce que** l'élément (3) de l'accumulateur de froid présente un revêtement, en particulier un revêtement intérieur pour la protection contre la formation de germes.

10. Système de climatisation selon l'une quelconque des revendications précédentes, **caractérisé en ce que** le milieu d'accumulateur de froid est formé par un milieu à changement de phase (PCM).

11. Système de climatisation selon l'une quelconque des revendications précédentes, **caractérisé en ce que** la température de changement de phase du milieu de l'accumulateur de froid (3) se situe dans une plage allant de 0°C à 30°C, en particulier de 2°C à 15°C, en particulier de préférence de 4°C à 12°C.

12. Système de climatisation selon l'une quelconque des revendications précédentes, **caractérisé en ce qu'**au moins un élément intercalaire est disposé dans l'élément de l'accumulateur de froid.

13. Système de climatisation selon l'une quelconque des revendications précédentes, **caractérisé en ce que** les éléments de l'accumulateur de froid sont disposés de façon symétrique par rapport à un plan moyen de l'évaporateur (1).
